# EUROPEAN PATENT SPECIFICATION

(11) **EP 1 080 806 B1**
(45) Date of publication and mention of the grant of the patent: **02.08.2006**
(21) Application number: 00116239.5
(22) Date of filing: 07.08.2000
(51) Int. Cl.: B21D 51/22, A47J 37/10

(54) **Method for the production of a non-stick frying-pan or saucepan**
Verfahren zum Herstellen einer Bratpfanne oder Kochtopf mit Antihaftbeschichtung
Procédé de fabrication d'une poêle à frire ou d'une casserole non collante

(30) Priority: 26.08.1999 IT MI991842
(43) Date of publication of application: 07.03.2001
(73) Proprietor: LAGOSTINA S.p.A., 28887 Omegna, Verbania (IT)
(72) Inventor: Moroni, Vitaliano, 28883 Gravellona Toce, Verbania (IT)
(74) Representative: Petruzzelli, Antonio

(56) References cited:
- EP-A- 0 259 056
- EP-A- 0 928 588
- US-A- 5 809 630

## Description

The present invention relates to a method used for the production of a non-stick frying-pan or saucepan and to the frying-pan or saucepan obtained in this way.

Non-stick frying-pans or saucepans have been known for some time, whose base has incisions designed to reduce the surface in contact with the foods to be cooked and to collect the liquids, particularly fats, released by the foods during cooking, and which may act as a non-stick cushion between the foods and the base itself, which base is also coated with a non-stick layer generally in polytetrafluoroethylene (PTFE), see for instance EP-A-0259056.

Moreover this frying-pan or saucepan, due the fact that it also limits the points of contact between the base and the utensils used for its washing or for removing the foods from its interior, keeps the non-stick coating intact for a long time.

The method traditionally used for producing a frying-pan or saucepan of this type comprises a first phase of striking of a disk in aluminium, steel or another suitable material in such a way as to generate, at the base of the frying-pan or saucepan, the incisions with the required shape.

This is followed by drawing of the disk to give shape to the frying-pan or saucepan, that is to say to obtain from the original disk a frying-pan or saucepan comprising a base and a side wall.

Application of the non-stick layer may take place before or after the phase of drawing and is generally obtained by means of the known technique of spraying.

The product obtained in this way, although demonstrating good non-stick properties, comes from a decidedly expensive production process as regards the phase of application of the non-stick coating layer by spraying, which requires complex and bulky systems.

For this reason the firms which manufacture frying-pans or saucepans, particularly if small firms, rely for the application of the non-stick coating on specialist outside firms with the result that they cannot keep the, entire production cycle under control.

On the other hand a considerably more economical process for the application of the non-stick coating to a frying-pan or saucepan, that is to say rolling, is not currently applied for non-stick frying-pans or saucepans with a struck base given that, due to the relative rigidity of the roller used for rolling, the non-stick layer would not succeed in sufficiently penetrating the dips defined by striking, thus leaving zones of the base of the frying-pan or saucepan completely uncovered.

An object of the present invention is thus that of providing a method for the production of a non-stick frying-pan or saucepan which avoids the disadvantages traditionally suffered, and in particular a method for the production of a non-stick frying-pan or saucepan which, although guaranteeing excellent non-stick properties and good durability of the product, is also considerably simplified and hence economical.

This object is achieved thanks to the process of production of a non-stick frying-pan or saucepan provided in accordance with any one of the independent claims given hereinbelow.

The process of production provided by the present invention substantially consists in anticipating the phase of application of the non-stick coating by performing it by the rolling technique, and of first applying the non-stick coating to a disk by rolling, and only after the phases of striking and drawing which, advantageously, can also take place simultaneously.

In this way the technique of rolling, very effective and above all very economical, can be exploited to produce a non-stick frying-pan or saucepan with struck base, avoiding leaving zones of the base of the frying-pan or saucepan free from non-stick coating. Rolling will in fact be applied to a smooth and flat disk and will guarantee even spreading of non-stick material over the whole surface of application.

Striking and successive drawing of the disk coated in this way will create a non-stick frying-pan or saucepan formed by an engraved base which is perfectly coated, also at the dips formed by the incisions.

What has been said will be made clearer on reading the following description of a preferred method of producing a non-stick frying-pan or saucepan in accordance with the present invention, referring to the accompanying drawings in which:
Fig. 1 shows an enlarged and sectioned perspective view of the frying-pan or saucepan obtained by the method of the present invention;
Fig. 2 shows the phase of striking of a disk coated by rolling, in the case wherein the phase of striking and drawing are separate;
Fig. 3 shows the phase of striking and drawing of a disk coated by rolling, in the case wherein the phases of striking and drawing are simultaneous.

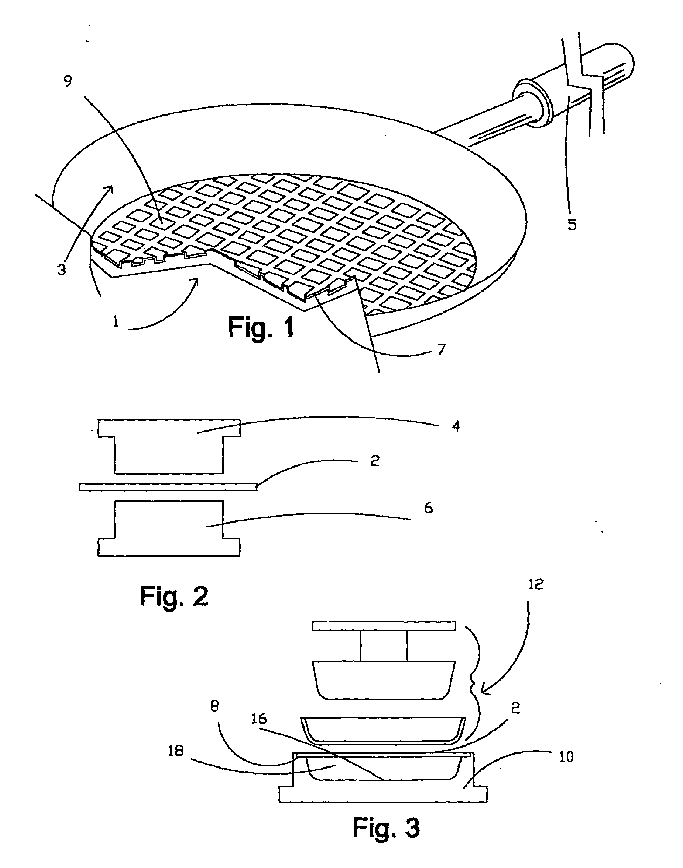

Fig. 1 shows an aluminium frying-pan or saucepan obtained by means of the process of the present invention.

It is formed by a base 1 and by a side wall 3 whereto a handle 5 is attached in a known manner, for example by screws (not shown).

The base 1 of the frying-pan or saucepan has internally a non-stick coating 7.

The struck base 1 of the frying-pan or saucepan has a thickness of 1.5 mm and describes an ordered series of dips 9 with a square plan and depth of 0.2 mm. The non-stick layer 7 adapts perfectly, as shown, in the dips 9 defined by the struck base 1.

Naturally the geometry of the striking can be chosen as required, using a different mould, and generally non-stick bases with incisions will be preferable, which incisions, in addition to those illustrated in the present embodiment, have a circular or even a simply rectilinear shape.

The method of production of the non-stick frying-pan or saucepan now described is given hereinbelow.

An aluminium disk with thickness between 1.5 mm and 10 mm is used and the layer of non-stick coating is applied by the rolling technique on at least the part intended to form the internal wall of the base of the frying-pan or saucepan.

The rolling technique involves applying the non-stick material on the surface to be coated by means of a roller pressed against the application surface.

Hardening of the coating applied in this way is achieved by transferring the disk into an appropriate firing furnace.

Fig. 2 shows the successive phase according to a first alternative of the production process of a non-stick frying-pan or saucepan according to the present invention.

In this case the coated disk 2 is struck simply by inserting it between the mould 4 and the counter-mould 6, and moulding with a pressure of approximately 0.8 tonnes/cm² or in any case adequate for the type of striking to be obtained.

The struck disk 2 is then subjected to drawing so as to form the base 1 and side wall 3.

Finally the edge of the side wall 3 of the frying-pan or saucepan is turned, the external base is turned if necessary and the handle 5 is attached.

An even more advantageous alternative process allows drawing and striking to be performed in a single phase.

To do this the coated disk 2 is initially rested at a shoulder 8 of the counter-mould 10 which circumscribes a cavity 18 in which forming of the frying-pan or saucepan takes place under the action of the punch 12.

More specifically, above the disk 2, a punch 12 is positioned having the profile required for the frying-pan or saucepan to be formed, which punch 12 is pushed to move vertically onto the disk 2 by the press operating at approximately 1 tonne/cm², which is a sufficient value for performing correctly both the drawing and the striking of the disk 2.

In order to carry out striking of the coated disk 2 the shape of the lower flat surface 16 of the counter-mould 10 is exploited.

In particular the actuation of the press pushes the punch 12 into the cavity 18 of the counter-mould 10 in such a way that, with the forward movement of the punch 12, the disk 2 gradually takes the shape of the frying-pan or saucepan.

At the end of the stroke of the punch 12 in the cavity 18, the coated disk 2, now drawn, defines a frying-pan or saucepan with a base 1 and a side wall 3.

While the base 1 of the frying-pan or saucepan obtained from the newly drawn disk 2 rests on the flat part 16 of the cavity 18, the pressure exerted thereon by the lower surface of the punch 12 allows its final striking to be carried out.

This latter method is preferable as it achieves the following advantages: a simple and very economical technique, rolling, is used to form the non-stick coating of a frying-pan or saucepan with struck base; a mould is eliminated in relation to the case wherein striking and drawing are performed separately; time is saved compared to the case wherein striking and drawing are performed separately; and finally it is possible to keep under control in the plant all the phases of the cycle of production of the frying-pan or saucepan, from application of the non-stick coating onto the disk to trimming of the finished product.

## Claims

1. Method of manufacture of a non-stick frying-pan or saucepan of the type comprising a struck internal face of the base (1) coated with a non-stick layer (7), **characterised in that** it comprises the following phases in succession:
- application of a non-stick coating (7) to at least one of the surfaces of a metal disk (2) by means of the rolling technique;
- drawing of the disk (2) and simultaneous striking of the inner face of the portion of the disk (2) acting as a base of the frying-pan or saucepan by means of a single mould.

2. Method of manufacture of a non-stick frying-pan or saucepan of the type comprising a struck internal face of the base (1) coated with a non-stick layer (7), **characterised in that** it comprises the following phases in succession:
- application of a non-stick coating to at least one of the surfaces of a metal disk (2) by means of the rolling technique;
- striking of the internal face of the portion of the disk (2) acting as a base of the frying-pan or saucepan;
- drawing of the coated and struck disk (2).

## Patentansprüche

1. Ein Verfahren zum Herstellen einer antihaftbeschichteten Bratpfanne oder eines Kochtopfs des Typs, der eine geprägte innere Oberfläche des Bodens (1) umfasst, welche mit einer Antihaftbeschichtung (7) beschichtet ist, **dadurch gekennzeichnet, dass** sie der Reihenfolge nach folgende Phasen umfasst:
- die Aufbringung einer Antihaftbeschichtung (7) auf mindestens eine der Oberflächen der Metallscheibe (2) mit Hilfe des Einwalzverfahrens;
- Ziehen der Scheibe (2) und gleichzeitiges Prägen der inneren Oberfläche des Teils der Scheibe (2), die als Boden der Bratpfanne oder des Kochtopfs dient, und zwar mit Hilfe einer einzigen Form.

2. Ein Verfahren zum Herstellen einer antihaftbeschichteten Bratpfanne oder eines Kochtopfs des Typs, der eine geprägte innere Oberfläche des Bodens (1) umfasst, welche mit einer Antihaftbeschichtung (7) beschichtet ist, **dadurch gekennzeichnet, dass** sie der Reihenfolge nach folgende Phasen umfasst:
- die Aufbringung einer Antihaftbeschichtung auf mindestens eine Oberfläche einer Metallscheibe (2) mit Hilfe des Einwalzverfahrens;
- Prägen der inneren Oberfläche des Teils der Scheibe (2), die als Boden der Bratpfanne oder des Kochtopfs dient;
- Ziehen der beschichteten und geprägten Scheibe (2).

## Revendications

1. Procédé de fabrication d'une poêle à frire ou d'une casserole non collante du type qui comprend une face interne de la base forgée (1) recouverte d'une couche non collante (7), **caractérisé par le fait qu'**il comprend les phases suivantes en succession :
- application d'une couche non collante (7) sur au moins une des surfaces d'un disque de métal (2) par laminage ;
- étirage du disque (2) et forgeage simultané de la face interne de la portion du disque (2) qui sert de base à la poêle à frire ou à la casserole au moyen d'un seul gabarit.

2. Procédé de fabrication d'une poêle à frire ou d'une casserole non collante du type comprenant une face interne de la base forgée (1) recouverte d'une couche non collante (7), **caractérisé par le fait qu'**il comprend les phases suivantes en succession :
- application d'une couche non collante sur au moins une des surfaces d'un disque de métal (2) par laminage ;
- forgeage de la face interne de la portion du disque (2) servant de base à la poêle à frire ou à la casserole ;
- étirage du disque recouvert et forgé (2).
